(19) **Europäisches Patentamt**
**European Patent Office**
**Office européen des brevets**

(11) **EP 2 015 616 B1**

(12) **FASCICULE DE BREVET EUROPEEN**

(45) Date de publication et mention
de la délivrance du brevet:
**08.09.2010   Bulletin 2010/36**

(51) Int Cl.:
*H05B 39/04* *(2006.01)*       *H02M 5/293* *(2006.01)*

(21) Numéro de dépôt: **07360033.0**

(22) Date de dépôt: **13.07.2007**

(54) **Procédé de reconnaissance de charge pour variateur et dispositif pour la mise en oeuvre de ce procédé**

Verfahren zur Ladungserkennung für Wandler und Vorrichtung zur Umsetzung dieses Verfahrens

Load recognition method for a variable speed drive and device for implementing this method

(84) Etats contractants désignés:
**AT BE BG CH CY CZ DE DK EE ES FI FR GB GR HU IE IS IT LI LT LU LV MC MT NL PL PT RO SE SI SK TR**

(43) Date de publication de la demande:
**14.01.2009   Bulletin 2009/03**

(73) Titulaire: **AB Plast S.r.l.**
**25018 Montichiari (IT)**

(72) Inventeurs:
• **Schultschik, Dietmar**
**9241 Wernberg (AT)**
• **Warum, Wolfgang**
**9500 Villach (AT)**
• **Demuth, Jürgen**
**9241 Wernberg (AT)**
• **Hernler, Walter**
**9581 Ledenitzen (AT)**

• **Modliba, Thomas**
**9020 Klagenfurt (AT)**
• **Gosch, Peter**
**9073 Klagenfurt-Viktring (AT)**
• **Piber, Ewald**
**9241 Wernberg (AT)**
• **Wagner, Wolfgang**
**9500 Villach (AT)**
• **David, Jean-Marc**
**9581 Ledenitzen (AT)**

(74) Mandataire: **Nuss, Pierre et al**
**Cabinet Nuss**
**10 Rue Jacques Kablé**
**67080 Strasbourg Cedex (FR)**

(56) Documents cités:
**EP-A- 1 784 059       EP-A2- 0 923 274**
**WO-A-2007/042598    WO-A-2007/068040**
**FR-A1- 2 802 360**

**Description**

La présente invention concerne le domaine des équipements électriques en milieu domestique, tertiaire ou industriel, notamment des dispositifs de commande et de gestion du niveau de luminosité de différents types de charges d'éclairage, à savoir des charges résistives, capacitives ou inductives, et a pour objet un procédé de reconnaissance de charge pour variateur.

L'invention a également pour objet un variateur comportant un dispositif de reconnaissance de charge pour la mise en oeuvre de ce procédé.

Actuellement, la commande et la gestion du niveau de luminosité de différents types de charges d'éclairage sont essentiellement réalisées par découpage de la phase d'alimentation de la charge, soit par conduction à l'angle, soit par coupure à l'angle.

En mode conduction à l'angle, la première partie de chaque demi-alternance est bloquée et la seconde partie est transmise à la charge, tandis qu'en mode coupure à l'angle, la première partie de chaque demi-alternance est transmise à la charge et la seconde partie est bloquée. Le mode conduction à l'angle est adapté aux charges inductives ou résistives, alors que le mode coupure à l'angle est adapté aux charges capacitives ou résistives.

Une coupure à l'angle sur charge inductive provoque des surtensions et une conduction à l'angle sur charge capacitive provoque des surintensités.

Des charges différentes nécessitent des procédés de commande différents. Ainsi, des lampes halogènes à basse tension à transformateur électronique sont généralement alimentées en mode coupure à l'angle ; des lampes halogènes à basse tension à transformateur à noyau de fer sont alimentées en mode conduction à l'angle, alors que des lampes à incandescence ou des lampes halogènes à haute tension peuvent être mises en oeuvre dans les deux modes.

Si une charge est alimentée dans un mode erroné, il peut se produire des situations pouvant conduire à un endommagement ou à une destruction du variateur.

Si un transformateur électronique, qui est généralement une charge capacitive, est alimenté en mode conduction à l'angle, alors la capacité doit être chargée pendant le flanc de commande, en un temps relativement court, à savoir de l'ordre de dix à quelques centaines de μs, ce qui entraîne à nouveau une impulsion de tension très élevée, qui peut conduire à une destruction des semiconducteurs de puissance.

Dans le cas contraire, si un transformateur à noyau de fer est alimenté en mode coupure à l'angle, alors l'énergie stockée dans le transformateur, qui est une charge inductive, produit un pic de tension à chaque demi-onde après le flanc de coupure, qui peut également avoir pour conséquence une destruction des semiconducteurs de puissance.

Pour obvier à ces inconvénients, il a été proposé différents procédés et dispositifs d'auto-adaptation d'un variateur à une charge.

A cet effet, on connaît, notamment par WO-A-92/15052, un variateur, au moyen duquel il est possible de régler la luminosité d'une charge, par exemple d'une lampe à incandescence, d'une lampe halogène à haute tension ou d'une lampe halogène à basse tension à noyau de fer ou à transformateur électronique, par une commande de phase, avec mise en oeuvre de deux semiconducteurs de puissance asservis en tension, branchés en opposition.

Ce document WO-A-92/15052 décrit différents procédés destinés à permettre d'éviter de telles situations mettant en danger de tels appareils. Le variateur travaille, après la mise sous tension, en mode coupure à l'angle et, si une surtension est relevée, l'appareil bascule en mode conduction à l'angle.

Des procédés analogues de reconnaissance de la charge sont également décrits, entre autres, dans EP-A- 1 119 094, EP-B-0 932 274 DE-A-102 25 748.5, EP-B-0 618667 et DE-A-197 51 828.

La reconnaissance de pics de tension consécutifs au flanc de coupure, en mode coupure à l'angle est un procédé largement répandu pour reconnaître des charges inductives. En détail, il se produit, par exemple, dans la demi-onde positive, une courte période après l'interruption du courant, un pic de tension négatif à la charge. La hauteur de ce pic de tension se conforme prioritairement en fonction de l'inductivité du transformateur et de la charge des lampes qui y sont raccordées. Ainsi le pic de tension est d'autant plus élevé que la charge du transformateur est faible. Le moment du flanc de coupure, c'est-à-dire l'angle du flux de courant, n'a cependant qu'une très faible influence sur la hauteur du pic de tension et est dans des limites très restreintes sur l'ensemble du domaine utile de réglage d'un variateur. Des flux de courant compris entre environ 30˚ et environ150˚ sont courants.

Dans EP-A-0 932 274, il est prévu de mesurer la tension directement à la charge et de la comparer à une valeur de seuil fixe. Ceci n'est, cependant, possible qu'avec des variateurs dénommés à trois conducteurs, dans lesquels le conducteur neutre est également relié au variateur. Dans le cas de variateurs à deux conducteurs - bien plus répandus dans la technique d'installation courante -, qui ne possèdent pas d'entrée de conducteur neutre, la tension à la charge n'est pas directement disponible, mais uniquement la tension aux bornes du variateur, à savoir entre l'entrée de phase et la sortie de charge.

Le pic de tension négatif à la charge, décrit plus haut, se traduit au niveau du variateur sous forme d'un pic de tension positif, qui est supérieur à la tension de réseau.

Les implémentations connues dans les variateurs à deux conducteurs ont toutes une valeur de seuil constante pour la reconnaissance de la surtension, qui doit être définie de telle manière qu'elle ne soit pas dépassée en fonctionnement normal. Dans le cas d'une tension de réseau de, par exemple, 230V ± 10%, la valeur de crête s'établit à un maximum de 358V et l'on prend encore en considération des signaux de télécommande centralisée, par exemple pour la commande d'un certain nombre d'utilisateurs, tels qu'un éclairage public ou un compteur de courant de nuit, qui peuvent avoir une tension pouvant atteindre jusqu'à $20V_{eff}$ et qui sont superposés à la tension de réseau, la valeur de seuil doit s'établir à au moins 400V.

Cette tension n'est, cependant, souvent pas encore atteinte, aussi bien avec des angles de flux de courant très faibles qu'avec des angles très grands, de sorte que la charge inductive n'est éventuellement reconnue que dans le cas d'une luminosité moyenne et peut, de ce fait, être alimentée en mode coupure à l'angle. Il n'en résulte, certes, pas un risque pour le variateur ou pour ses parties constitutives, cependant, les pics de courant peuvent entraîner des perturbations inadmissibles dans le réseau basse tension, ainsi qu'à un développement gênant de bruit dans le transformateur.

D'après EP-A-1 119 094, il est prévu un procédé, dans lequel la luminosité est augmentée lentement à partir de l'angle de coupure minimal, jusqu'à ce qu'un certain nombre de surtensions soit relevé, puis l'alimentation est basculée en mode conduction à l'angle. Ce procédé évite, certes, un fonctionnement prolongé dans un mode erroné, la reconnaissance de mode ne s'effectue, toutefois qu'au-delà d'une pointe de tension d'environ plus de 400V.

Par ailleurs, on connaît par EP-A-1 784 059, WO 2007/042598 et WO 2007/068040 un procédé et un dispositif, respectivement selon le préambule des revendications 1 et 7.

La présente invention a pour but de pallier ces inconvénients en proposant un procédé de reconnaissance de charge pour variateur selon la revendication 1 et un variateur comportant un dispositif de reconnaissance de charge pour la mise en oeuvre de ce procédé selon la revendication 7 permettant, également pour des variateurs à deux conducteurs, de réaliser une reconnaissance du type de charge en présence de petits angles de flux de courant.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

les figures 1 à 5 sont des diagrammes temporels représentant la valeur de seuil dynamique $U_{St}$ en fonction de la durée du flux de courant et de la durée de mesure, ainsi que la tension aux bornes du variateur, à des angles de flux de courant différents, obtenus par mise en oeuvre du procédé conforme à l'invention ;

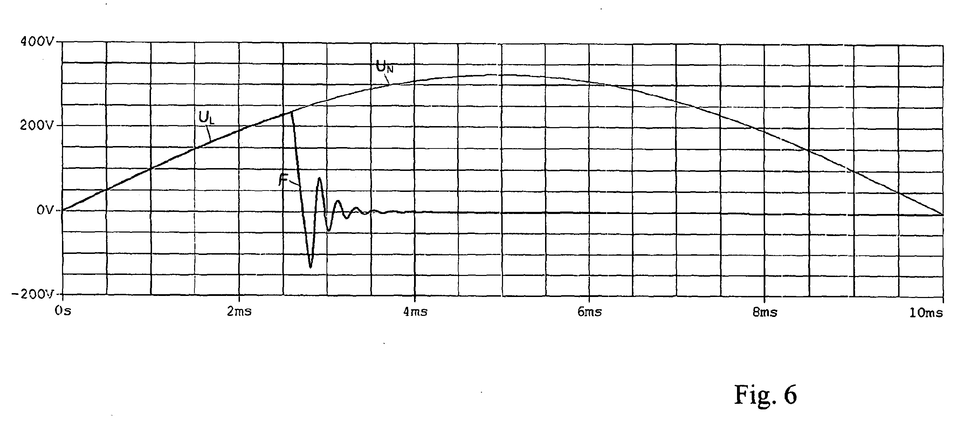

la figure 6 est un diagramme temporel représentant la courbe de la tension de réseau $U_N$, ainsi que la courbe de la tension $U_L$ aux bornes d'une charge inductive en mode coupure à l'angle ;

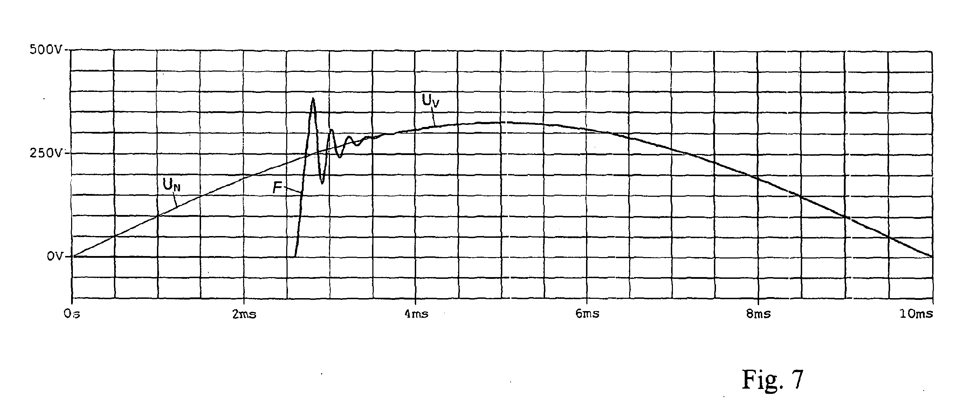

la figure 7 est un diagramme analogue à celui de la figure 6 représentant la courbe de la tension $U_V$ aux bornes du variateur, et
la figure 8 est un schéma par blocs du dispositif pour la mise en oeuvre du procédé conforme à l'invention.

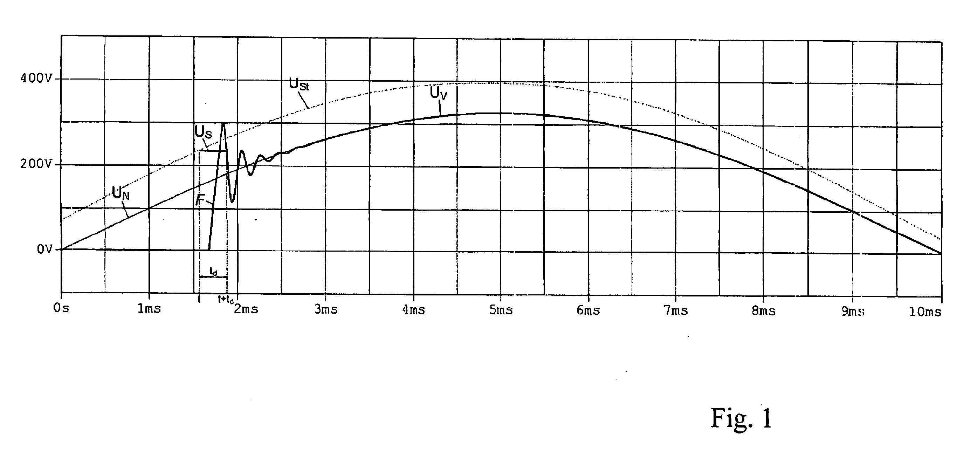

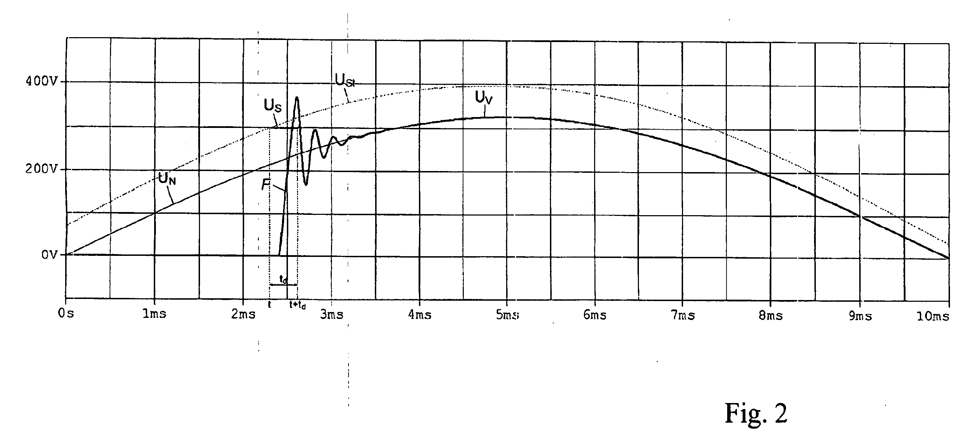

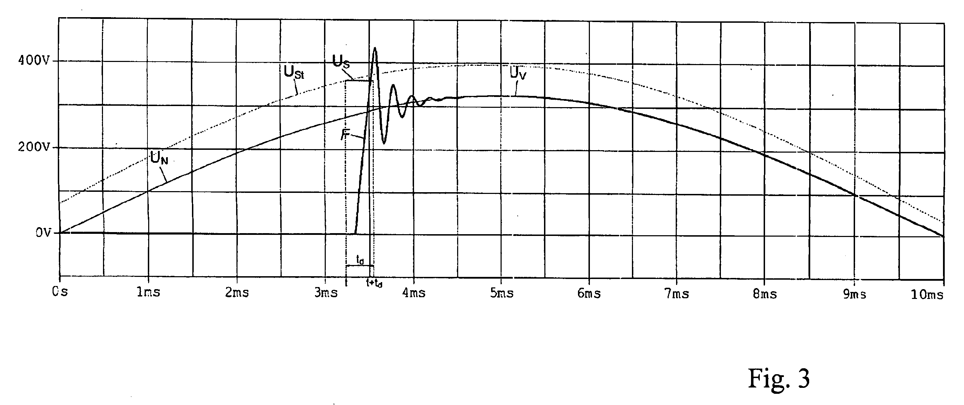

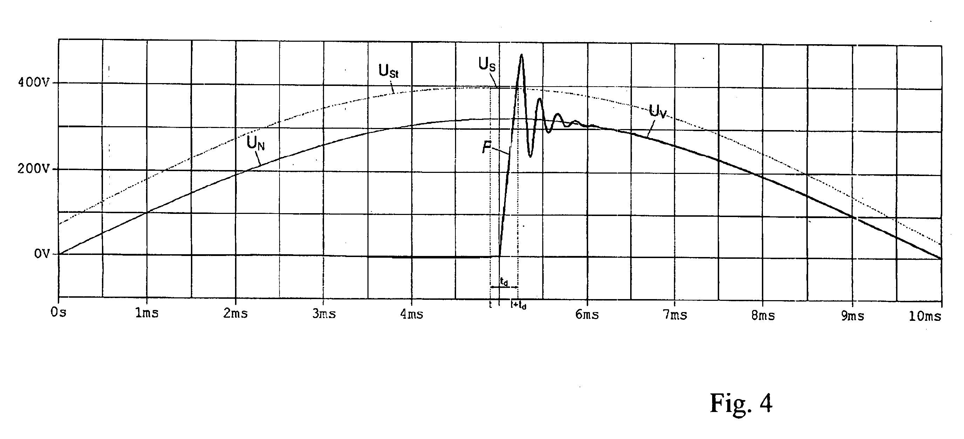

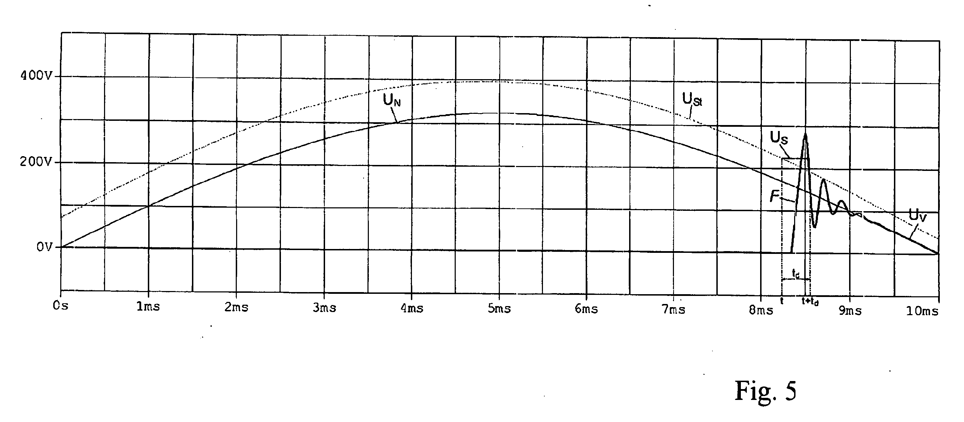

Conformément à l'invention, et comme le montrent plus particulièrement les diagrammes temporels des figures 1 à 5 des dessins annexés, le procédé de reconnaissance de charge pour variateur consiste à effectuer une comparaison de la tension $U_V$ aux bornes du variateur avec une valeur de seuil $U_S$ adaptée dynamiquement et dont la hauteur est dépendante de l'instant t auquel se produit le flanc de coupure F.

Conformément à une caractéristique de l'invention, la durée de la mesure d'une pointe de tension après le flanc de coupure F est établie à une valeur fixe $t_d$, par exemple de l'ordre de $300\mu s$. En ce qui concerne la valeur de seuil $U_S$, il est alors choisi une tension qui, en conditions normales de fonctionnement, c'est-à-dire en cas de connexion à une charge ohmique (lampes à incandescence ou lampes halogènes à haute tension) ou capacitive (lampe halogène à basse tension à transformateur électronique), n'est en aucun cas dépassée pendant la mesure. La valeur de seuil $U_S$ a la valeur de la courbe $U_{St}$ à l'instant t auquel se produit le flanc de coupure F et reste constante pendant la durée de la mesure. A cet effet, la tension est naturellement établie à une valeur correspondant à la valeur du réseau, à savoir 230V, augmentée de 10% et d'une valeur supplémentaire de sécurité de, par exemple, 35V.

Selon une autre caractéristique de l'invention, la valeur de seuil $U_S$ adaptée dynamiquement est calculée par mise en oeuvre des équations suivantes:

$$U_S = \begin{cases} \hat{U}_{Max}.\sin(\pi.\dfrac{t+t_d}{T}) + \Delta U & \left| t < \dfrac{T}{2} - t_d \right. \\[2mm] \hat{U}_{Max} + \Delta U & \left| \dfrac{T}{2} - t_d \leq t < \dfrac{T}{2} \right. \\[2mm] \hat{U}_{Max}.\sin(\pi.\dfrac{t}{T}) + \Delta U & \left| t \geq \dfrac{T}{2} \right. \end{cases}$$

$$U_{STR} = \frac{R9}{R8 + R9}.U_S$$

dans lesquelles :

$U_{Max}$ = tension effective maximale du réseau (par exemple 230$V_{eff}$ +10% = 253$V_{eff}$)

$\hat{U}_{Max}$ = valeur de crête de la tension du réseau (par exemple 253$V_{eff}$ . $\hat{U}$ = 358V

$\Delta U$ = marge de sécurité pour des signaux de télécommande (par exemple 35V).

T = durée d'une demi période du réseau (par exemple 10 ms pour f = 50Hz)

t = instant auquel se produit le flanc de coupure pendant la demi-onde de réseau

$t_d$ = durée de mesure (par exemple 300$\mu$s)

$U_S$ = valeur de seuil dynamique

$U_{STR}$ = tension de référence au comparateur

R8/R9 = résistance du diviseur de tension.

La répartition en trois zones temporelles est nécessaire, du fait que, dans la première moitié de chaque demi-onde du réseau, la tension s'accroît et qu'en conséquence la valeur de seuil doit être plus élevée que la tension en fin de période de mesure (instant t + $t_d$), alors que dans chaque deuxième demi-onde du réseau la tension décroît, de sorte que la valeur de seuil doit être plus élevée qu'au début de la période de mesure (instant t). L'allure de $U_S$ est dépendante de instant t auquel se produit le flanc de coupure F.

L'allure de $U_{ref}$ est représentée dans les figures 1 à 5 par la courbe $U_{St}$.

L'adaptation dynamique de la valeur de seuil permet ainsi la reconnaissance d'une charge inductive aussi bien avec des angles de flux de courant très faibles qu'avec de grands angles de flux de courant

Selon une caractéristique de l'invention, la valeur de seuil ($U_S$) reste constante pendant la mesure.

Par ailleurs, lors de la première mise en marche après l'application de la tension de réseau, le variateur est démarré en mode coupure à l'angle et, en cas de reconnaissance d'une surtension pendant la durée de la mesure, dans plusieurs demi-ondes successives, il est basculé en mode conduction à l'angle.

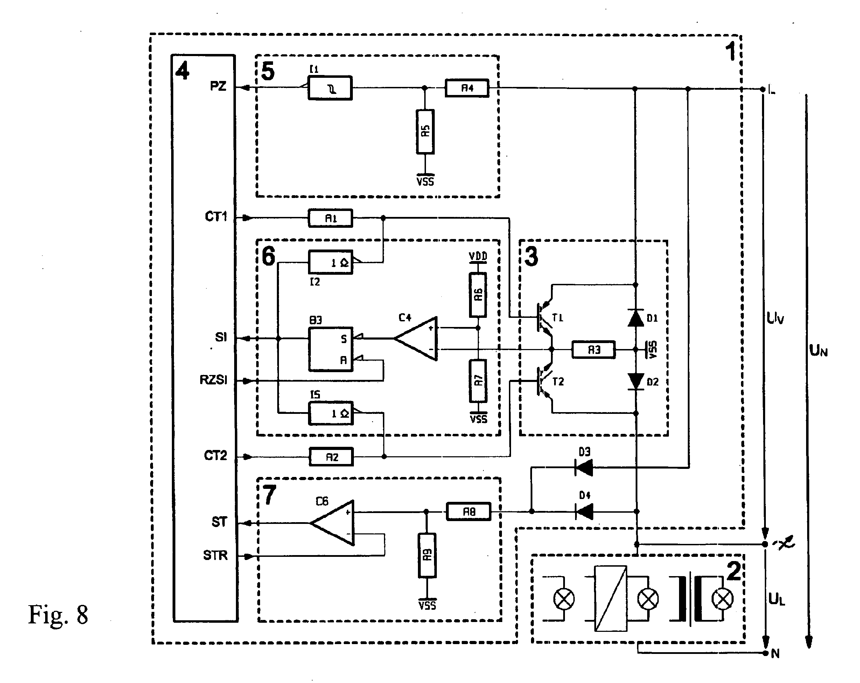

Le procédé conforme à l'invention est mis en oeuvre, comme le montre la figure 8 des dessins annexés, au moyen d'un variateur 1 comportant un dispositif de reconnaissance d'une charge 2, qui est essentiellement constitué par un interrupteur de puissance 3, par un microcontrôleur 4, par un circuit 5 de reconnaissance du passage à zéro, par un circuit 6 de reconnaissance de surintensité ou de court-circuit et par un circuit 7 de reconnaissance de surtension avec adaptation dynamique de la valeur de seuil.

La charge 2 peut être, de manière connue, ohmique (par exemple, lampes à incandescence ou lampes halogènes à haute tension), capacitive (par exemple, lampe halogène à basse tension à transformateur électronique) ou inductive (par exemple, lampe halogène à basse tension à transformateur à noyau de fer).

L'interrupteur de puissance 3 est constitué par deux transistors T1 et T2 de type connu sous la désignation IGBT (transistor bipolaire à grille isolée ), par deux diodes de redressement D1 et D2, ainsi que par une résistance R3 pour la mesure du courant. Le microcontrôleur 4 assure, par deux sorties CT1 et CT2 respectivement reliées à une résistance R1 et à une résistance R2, la commande des deux transistors T1 et T2, l'exploitation du signal de passage à zéro pour la synchronisation avec la fréquence de réseau, l'exploitation de la surintensité, ainsi que la reconnaissance de la surtension par une adaptation dynamique de la valeur de seuil.

Les deux transistors T1 et T2 sont alternativement commandés par le microcontrôleur 4dans les deux demi-ondes du réseau en fonction de la commande de phase.

Dans le mode de fonctionnement en coupure à l'angle, le transistor T1 est mis en circuit au début de la demi-onde de réseau positive et, après écoulement de la durée de flux de courant prédéterminée, il est à nouveau mis hors circuit. Le courant passe par le transistor T1, la résistance R3, la diode D2 et la charge 2, à partir du conducteur de phase L jusqu'au conducteur neutre N. Dans la demi-onde de réseau négative, le transistor T2 est commandé de manière identique et le courant passe à travers la charge 2, le transistor T2, la résistance R3 et la diode D1 du conducteur neutre N jusqu'au conducteur de phase L.

En mode conduction à l'angle, le transistor T1 est commandé pendant la durée du flux de courant, avant la fin de la demi-onde de réseau positive, et est mis hors circuit à la fin de la demi-onde. Le flux de courant est identique à celui en mode de fonctionnement à coupure à l'angle. Dans la demi-onde de réseau négative, le transistor T2 est commandé de manière identique.

Pour la synchronisation avec la fréquence de réseau, le microcontrôleur 4 doit connaître le moment du passage à zéro du réseau. Ceci peut être obtenu, par exemple, par la mesure de la tension au conducteur de phase L par l'intermédiaire du circuit 5 de reconnaissance du passage à zéro, qui comporte un diviseur de tension constitué par des résistances R4 et R5. Ce circuit 5 est pourvu, en outre, d'un inverseur I1, muni d'une entrée de bascule de Schmidt et qui prépare le signal PZ pour le microcontrôleur 4.

Le courant de charge est mesurée à la résistance R3 de l'interrupteur de puissance 3 et alimente un comparateur C4 du circuit 6 de reconnaissance de surintensité ou de court-circuit, qui compare cette tension avec une tension de référence fixe. Si le courant augmente au-delà de la valeur préétablie, alors un basculeur bistable B3 du circuit 6 est alimenté par la sortie du comparateur C4. La sortie du basculeur bistable B3 est, d'une part, reliée à une entrée de surintensité SI du microcontrôleur 4 et, d'autre part, par l'intermédiaire d'inverseurs 12 et 15 aux transistors T1 et T2 de l'interrupteur de puissance 3 pour la mise hors circuit de ces derniers.

Le microcontrôleur 4 est pourvu d'une sortie remise à zéro des surintensités RZSI, par laquelle il est possible d'effectuer une remise à zéro de la bascule bistable B3, afin de permettre à nouveau l'alimentation des transistors T1 et T2 dans la demi-onde de réseau suivante et, ainsi, de ne couper l'alimentation du variateur qu'après plusieurs reconnaissances d'une surintensité, ce qui se produit, par exemple, dans le cas d'une charge trop forte ou d'un court-circuit.

La tension de seuil est amenée par le microcontrôleur 4 à travers une sortie de surtension de référence STR à une entrée d'inverseur d'un comparateur C6 du circuit 7 de reconnaissance de surtension avec adaptation dynamique de la valeur de seuil et la tension redressée au variateur 1 est réduite par l'intermédiaire d'un diviseur de tension, constitué par des résistances R8 et R9 dudit circuit 7, et est amenée à l'autre entrée du comparateur C6. La sortie du comparateur C6 est également reliée au microcontrôleur 4 à une entrée de surtension ST.

Si, dans plusieurs demi-ondes de réseau successives (par exemple dix), une pointe de tension est détectée, alors le microcontrôleur 4 bascule du mode de fonctionnement en coupure à l'angle dans le mode de fonctionnement en conduction à l'angle. Du fait d'une reconnaissance répétée, il est évité que les perturbations du réseau électrique, telles qu'elles peuvent, par exemple, survenir, dans le même réseau, en cas d'orages ou lors de la mise en route et de l'arrêt de machines, ne conduisent à un changement du mode de fonctionnement.

Le seuil de tension, qui est dépendant de l'angle du flux de courant choisi, est amené par le microcontrôleur 4 à l'entrée d'inversion du comparateur C6. La tension redressée au variateur 1 est réduite au moyen du diviseur de tension constitué par les résistances R8 et R9 et est amenée à l'autre entrée du comparateur C6. La sortie de ce comparateur C6 est à nouveau amenée au microcontrôleur 4. Il est également possible, en fonction du microcontrôleur 4 mis en oeuvre, d'utiliser un comparateur interne à tension de référence programmable, voire également un convertisseur numérique-analogique, pour la production de la tension de référence.

Grâce à l'invention, il est possible de réaliser la commande de différents types de charges, en particulier de charges d'éclairage, à savoir résistives, capacitives ou inductives.

En outre, l'invention permet un changement dynamique du type de charge par vérification permanente de la compatibilité entre la charge connectée et le mode de découpage actif, pour autant que la tension d'alimentation du variateur soit interrompue avant le changement de la charge, ainsi que la gestion de prises commandées.

Enfin, le procédé et le dispositif conformes à l'invention permettent d'obtenir une protection du variateur contre les surchauffes, les surcharges, les courts-circuits, les surtensions, etc....

Bien entendu, l'invention n'est pas limitée au mode de réalisation décrit et représenté aux dessins annexés.

**Revendications**

1. Procédé de reconnaissance du type de charge pour variateur, par comparaison de la tension ($U_V$) aux bornes du variateur avec une valeur de seuil ($U_S$), **caractérisé en ce qu'**il consiste à effectuer ladite comparaison de la tension ($U_V$) aux bornes du variateur, en mode coupure à l'angle, suite au flanc de coupure, avec une valeur de seuil ($U_S$) adaptée dynamiquement et dont la hauteur est dépendante de l'instant (t) auquel se produit le flanc de coupure(F).

**2.** Procédé, suivant la revendication 1, **caractérisé en ce que** la durée ($t_d$) de la mesure d'une pointe de tension après le flanc de coupure (F) aux bornes du variateur ($U_v$) est établie à une valeur fixe, par exemple de l'ordre de $300\mu$s.

**3.** Procédé, suivant la revendication 1, **caractérisé en ce que** la valeur de seuil ($U_S$) est choisie de telle manière qu'en conditions normales de fonctionnement, elle ne soit en aucun cas dépassée pendant la mesure.

**4.** Procédé, suivant la revendication 1, **caractérisé en ce que** la valeur de seuil ($U_S$) adaptée dynamiquement est calculée par mise en oeuvre des équations suivantes:

$$U_S = \begin{cases} \hat{U}_{Max}.\sin(\pi.\dfrac{t+t_d}{T}) + \Delta U & \left| t < \dfrac{T}{2} - t_d \right. \\[2ex] \hat{U}_{Max} + \Delta U & \left| \dfrac{T}{2} - t_d \leq t < \dfrac{T}{2} \right. \\[2ex] \hat{U}_{Max}.\sin(\pi.\dfrac{t}{T}) + \Delta U & \left| t \geq \dfrac{T}{2} \right. \end{cases}$$

$$U_{STR} = \frac{R9}{R8+R9}.U_S$$

dans lesquelles :

$U_{Max}$ = tension effective maximale du réseau (par exemple $230V_{eff}$ +10% = $253V_{eff}$)

$\hat{U}_{Max}$ = valeur de crête de la tension du réseau (par exemple $253V_{eff.}$ $\sqrt{2}$ = 358V

$\Delta U$ = marge de sécurité pour des signaux de télécommande (par exemple 35V).

T = durée d'une demi période du réseau (par exemple 10 ms pour f = 50Hz) t = instant auquel se produit le flanc de coupure pendant la demi-onde de réseau

$t_d$ = durée de mesure (par exemple$300\mu$s)

$U_S$ = valeur de seuil dynamique

$U_{STR}$ = tension de référence au comparateur

R8/R9 = résistance du diviseur de tension.

**5.** Procédé, suivant l'une quelconque des revendication 1 à 4, **caractérisé en ce que** la valeur de seuil ($U_S$) reste constante pendant la mesure.

**6.** Procédé, l'une quelconque des revendication 1 à 5, **caractérisé en ce que** le variateur, lors de la première mise en marche après l'application de la tension de réseau, est démarré en mode coupure à l'angle et, en cas de reconnaissance d'une surtension pendant la durée de la mesure, dans plusieurs demi-ondes successives, il est basculé en mode conduction à l'angle.

**7.** Variateur (1) comportant un dispositif de reconnaissance du type d'une charge (2) pour la mise en oeuvre du procédé suivant l'une quelconque des revendications 1 à 6, dans lequel le dispositif de reconnaissance du type de la charge (2) est essentiellement constitué par un interrupteur de puissance (3), par un microcontrôleur (4), par un circuit (5) de reconnaissance du passage à zéro et par un circuit (6) de reconnaissance de surintensité ou de court-circuit, **caractérisé en ce qu'**il comporte, en outre, un circuit (7) de reconnaissance de surtension, suite au flanc de coupure (F) en mode coupure à l'angle, avec adaptation dynamique de la valeur de seuil, telle que la hauteur dudit seuil est dépendante de l'instant auquel se produit le flanc de coupure (F).

**Claims**

1.  Method for recognising the type of load for a variable speed drive by comparing the voltage ($U_v$) at the terminals of the variable speed drive with a threshold value ($U_S$), **characterised in that** it consists of carrying out the said comparison of the voltage ($U_V$) at the terminals of the variable speed drive, in cutoff mode at an angle, following the cutoff flank, with a threshold value ($U_S$) adapted dynamically, the height of which is dependent on the time (t) at which the cutoff flank (F) is produced.

2.  Method according to claim 1, **characterised in that** the duration ($t_d$) of the measurement of a voltage point after the cutoff flank (F) at the terminals of the controller ($U_v$) is established at a fixed value, for example in the order of 300 $\mu$s.

3.  Method according to claim 1, **characterised in that** the threshold value ($U_S$) is selected such that in normal conditions of functioning it is never exceeded during the measurement.

4.  Method according to claim 1, **characterised in that** the threshold value ($U_S$) adapted dynamically is calculated by using the following equations:

$$U_S = \begin{cases} \hat{U}_{Max}.\sin(\pi.\frac{t+t_d}{T}) + \Delta U & \left| t < \frac{T}{2} - t_d \right. \\ \hat{U}_{Max} + \Delta U & \left| \frac{T}{2} - t_d \leq t < \frac{T}{2} \right. \\ \hat{U}_{Max}.\sin(\pi.\frac{t}{T}) + \Delta U & \left| t \geq \frac{T}{2} \right. \end{cases}$$

$$U_{STR} = \frac{R9}{R8 + R9}.U_S$$

in which:
$U_{Max}$ = maximum effective network voltage (for example 230$V_{eff}$ + 10% = 253$V_{eff}$)
$\hat{U}_{Max}$ = peak value of the network voltage (for example 253$V_{eff}$. $\sqrt{2}$= 358V
$\Delta U$ = safety margin for remote control signals (for example 35V)
T = duration of a half life of the network (for example 10 ms for f = 50Hz)
t = time at which the cutoff flank is produced during the half-wave of the network
$t_d$ = duration of measurement (for example 300 $\mu$s)
$U_S$ = dynamic threshold value
$U_{STR}$ = reference voltage at the comparator R8/R9 = resistance of voltage divider.

5.  Method according to any one of claims 1 to 4, **characterised in that** the threshold value ($U_S$) remains constant during the measurement.

6.  Method according to any one of claims 1 to 5, **characterised in that** the variable speed drive during the first start up after the application of the network voltage is started in cutoff mode at an angle, and in the case of identifying excess voltage during the duration of the measurement in several successive half-waves, it is switched into conduction mode at an angle.

7.  Variable speed drive (1) comprising a device for recognising the type of load (2) for implementing the method according to any one of claims 1 to 6, in which the device for recognising the type of load (2) is formed essentially by a power switch (3), a microcontroller (4), a circuit (5) for recognising the passage to zero, and a circuit (6) for recognising an overcurrent or short circuit, **characterised in that** it also comprises a circuit (7) for recognising excess voltage, following the cutoff flank (F) in cutoff mode at an angle, with the dynamic adaptation of the threshold value, such that the height of said threshold is dependent on the time at which the cutoff flank (F) is produced.

**Patentansprüche**

1. Verfahren der Lasterkennung für Dimmer durch Vergleich der Spannung ($U_v$) an den Anschlüssen des Dimmers mit einem Schwellwert ($U_s$), **dadurch gekennzeichnet, dass** es darin besteht, im Phasenabschnittmodus den genannten Vergleich der Spannung ($U_v$) an den Anschlüssen des Dimmers im Anschluss an die Abschnittflanke mit einem Schwellwert ($U_s$) durchzuführen, der dynamisch adaptiert wird und dessen Höhe von dem Moment (t) abhängig ist, an dem die Abschnittflanke (F) eintritt.

2. Verfahren nach Anspruch 1, **dadurch gekennzeichnet, dass** die Dauer ($t_d$) der Messung einer Spannungsspitze an den Anschlüssen des Dimmers ($U_v$) nach der Abschnittflanke (F) auf einen festen Wert gesetzt ist, z. B. in der Größenordnung von 300 $\mu$s.

3. Verfahren nach Anspruch 1, **dadurch gekennzeichnet, dass** der Schwellwert ($U_s$) derart gewählt ist, dass er unter normalen Funktionsbedingungen während der Messung in keinem Fall überschritten wird.

4. Verfahren nach Anspruch 1, **dadurch gekennzeichnet, dass** der Schwellwert ($U_s$), der dynamisch angepasst wird, unter Verwendung der folgenden Gleichungen berechnet wird:

$$U_S = \begin{cases} \hat{U}_{Max} \cdot \sin(\pi \cdot \dfrac{t + t_d}{T}) + \Delta U & \left| t < \dfrac{T}{2} - t_d \right. \\[2ex] \hat{U}_{Max} + \Delta U & \left| \dfrac{T}{2} - t_d \le t < \dfrac{T}{2} \right. \\[2ex] \hat{U}_{Max} \cdot \sin(\pi \cdot \dfrac{t}{T}) + \Delta U & \left| t \ge \dfrac{T}{2} \right. \end{cases}$$

$$U_{STR} = \frac{R9}{R8 + R9} \cdot U_S$$

wobei bedeuten:

$U_{Max}$ = maximale effektive Netzspannung (z. B. 230 $V_{eff}$ + 10 % = 253 $V_{eff}$),
$\hat{U}_{Max}$ = Spitzenwert der Netzspannung (z. B. 253 $V_{eff}$ x $\sqrt{2}$ = 358 V),
$\Delta U$ = Sicherheitsmarge für Fernsteuerungssignale (z. B. 35 V),
T = Dauer einer Halbperiode des Netzes, (z. B. 10 ms für f = 50 Hz),
t = Zeitpunkt, zu dem sich während einer Halbwelle des Netzes der Flankenanschnitt ereignet,
$t_d$ = Messdauer (z. B. 300 $\mu$s),
$U_S$ = dynamischer Schwellwert,
$U_{STR}$ = Referenzspannung am Komparator,
R8/R9 = Widerstand des Spannungsteilers.

5. Verfahren nach einem der Ansprüche 1 bis 4, **dadurch gekennzeichnet, dass** der Schwellwert ($U_s$) während der Messung konstant bleibt.

6. Verfahren nach einem der Ansprüche 1 bis 5, **dadurch gekennzeichnet, dass** der Dimmer bei Beginn des Betriebs nach Anlegen der Netzspannung im Phasenabschnittmodus gestartet wird und im Fall einer Überspannungserkennung während der Messdauer in mehreren aufeinander folgenden Halbwellen in den Phasenanschnittmodus geschaltet wird.

7. Dimmer (1), umfassend eine Vorrichtung zum Erkennen des Typs einer Last (2) zum Durchführen des Verfahrens nach einem der Ansprüche 1 bis 6, in dem die Vorrichtung zum Erkennen des Typs der Last (2) im Wesentlichen gebildet ist durch einen Leistungsschalter (3), durch einen Mikrokontroller (4), durch eine Schaltung (5) zum Erkennen des Nulldurchgangs und durch eine Schaltung (6) zum Erkennen von Überstrom und Kurzschluss, **dadurch gekennzeichnet, dass** er unter anderem eine Schaltung (7) umfasst zum Erkennen einer auf die Abschnittflanke (F) im Phasenabschnittmodus folgenden Überspannung, mit dynamischer Adaption des Schwellwerts, derart dass die Höhe der genannten Schwelle abhängt vom Augenblick, an dem die Abschnittflanke (F) eintritt.

Fig. 1

EP 2 015 616 B1

Fig. 2

Fig. 3

Fig. 4

Fig. 5

Fig. 6

Fig. 7

EP 2 015 616 B1

Fig. 8

17

## RÉFÉRENCES CITÉES DANS LA DESCRIPTION

**Documents brevets cités dans la description**

- WO 9215052 A
- EP 1119094 A
- EP 0932274 B
- DE 10225748 A
- EP 0618667 B
- DE 19751828 A
- EP 0932274 A
- EP 1784059 A
- WO 2007042598 A
- WO 2007068040 A